# EUROPÄISCHE PATENTSCHRIFT

(11) **EP 0 906 396 B1**
(45) Veröffentlichungstag und Bekanntmachung des Hinweises auf die Patenterteilung: **16.04.2003**
(21) Anmeldenummer: 97924000.9
(22) Anmeldetag: 26.05.1997
(51) Int. Cl.: C11D 3/37, C11D 3/00

(54) **VERWENDUNG VON WASSERLÖSLICHEN, NVI- ODER NVPO-EINHEITEN ENTHALTENDEN COPOLYMERISATEN ALS FARBÜBERTRAGUNGSINHIBITOREN IN WASCHMITTELN**
USE OF WATER-SOLUBLE COPOLYMERS CONTAINING NVI OR NVPO UNITS AS COLOUR TRANSFER INHIBITORS IN LAUNDRY DETERGENTS
UTILISATION DE COPOLYMERISATS CONTENANT DES UNITES NVI OU NVPO ET SOLUBLES DANS L'EAU COMME INHIBITEURS DE TRANSFERT DE COULEURS DANS DES COMPOSITIONS DE LESSIVE

(30) Priorität: 29.05.1996 DE 19621509
(43) Veröffentlichungstag der Anmeldung: 07.04.1999
(73) Patentinhaber: BASF AKTIENGESELLSCHAFT, 67056 Ludwigshafen (DE)
(72) Erfinder: BOECKH, Dieter, D-67117 Limburgerhof (DE); STEIN, Stefan, D-55291 Saulheim (DE); FUNHOFF, Angelika, D-68165 Mannheim (DE); LUX, Jürgen, Alfred, D-67150 Niederkirchen (DE); JÄGER, Hans-Ulrich, D-67434 Neustadt (DE)
(86) Internationale Anmeldenummer: EP9702680
(87) Internationale Veröffentlichungsnummer: WO97045517

(56) Entgegenhaltungen:
- EP-A- 0 635 566
- WO-A-97/23592
- DE-A- 4 235 798

## Beschreibung

Die Erfindung betrifft die Verwendung von wasserlöslichen Copolymerisaten auf Basis von N-Vinylimidazol und N-Vinylpyrrolidon als Farbübertragungsinhibitoren in Waschmitteln.

Aus der DE-A-2 814 287 sind Waschmittel bekannt, die 0,1 bis 10 Gew.-% an einem in Wasser löslichen bzw. dispergierbaren Homo- oder Copolymeren des N-Vinylimidazols als verfärbungsinhibierenden Zusatz enthalten. Die Copolymerisate enthalten mindestens 25 Mol-% N-Vinylimidazol einpolymerisiert.

Aus der EP-A-0 635 565 sind Waschmittelformulierungen bekannt, die Copolymerisate aus N-Vinylimidazol und N-Vinylpyrrolidon mit einem mittleren Molekulargewicht von 5000 bis 50000 enthalten. Der Gehalt an N-Vinylimidazol in den Copolymerisaten beträgt mindestens 20 Mol-%. Gemäß der Lehre der EP-A-0 635 566 werden die vorstehend genannten Copolymerisate als Farbübertragungsinhibitor in Waschmitteln verwendet, deren Tensidsystem frei von Alkylbenzolsulfonaten ist. Die Waschmittel können gegebenenfalls Cellulasen oder Peroxidasen als Enzym enthalten.

Die bekannten niedermolekularen Farbübertragungsinhibitoren mit Vinylimidazolgehalten über 20 % zeigen beim Waschen von gefärbten Textilien neben dem gewünschten Effekt der Farbübertragungsinhibierung eine störende farbablösende Wirkung. Außerdem beeinträchtigen hohe Anteile an anionischen Tensiden und an Polycarboxylaten in Waschmitteln die Wirksamkeit der bekannten Farbübertragungsinhibitoren.

Der Erfindung liegt die Aufgabe zugrunde, für den Einsatz in Waschmitteln Farbübertragungsinhibitoren zur Verfügung zu stellen, die beim Waschen von gefärbtem Textilgut gegenüber den bekannten Farbübertragungsinhibitoren eine geringere farbablösende Wirkung auf die gefärbten Textilien haben und deren Wirksamkeit von anionischen Tensiden und Polycarboxylaten nicht in dem Maße herabgesetzt wird, wie dies bei den bekannten Farbübertragungsinhibitoren der Fall ist.

Die Aufgabe wird erfindungsgemäß gelöst mit der Verwendung von wasserlöslichen Copolymerisaten, wie sie im Anspruch 1 definiert werden, als Farbübertragungsinhibitoren in Waschmitteln.

Die in Betracht kommenden Copolymerisate werden mit Ausnahme der 4-Vinylpyridin-N-oxid enthaltenden Polymeren durch Copolymerisieren der diesen Copolymerisaten zugrunde liegenden Monomeren hergestellt. Verfahren dieser Art sind bekannt, vgl. beispielsweise WO-A-94/26796. Copolymerisate von 4-Vinylpyridin-N-oxid sind dadurch erhältlich, daß man 4-Vinylpyridin mit den Monomeren der Gruppen (b) und (c) copolymerisiert und anschließend das einpolymerisierte Vinylpyridin zu Vinylpyridin-N-oxid -Einheiten oxidiert. Vinylpyridin-N-oxid-Einheiten enthaltende Polymerisate werden beispielsweise in der WO-A-94/2578 als Farbübertragungsinhibitor in Waschmitteln beschrieben.
(a) 8 bis 15 Mol-% N-Vinylimidazol und
(b) 85 bis 92 Mol-% N-Vinylpyrrolidon
einpolymerisiert enthalten, wobei die Summe von (a) und (b) in Mol-% immer 100 beträgt.

Die Monomeren der Gruppe (c) werden zur Modifizierung der Copolymerisate aus den Komponenten (a) und (b) eingesetzt. Geeignete Monomere der Gruppe (c) sind beispielsweise Vinylester gesättigter Carbonsäuren, z.B. Vinylformiat, Vinylacetat, Vinylpropionat oder Vinylbutyrat, Ester der Acrylsäure und Methacrylsäure, die sich jeweils von Alkoholen mit 1 bis 8 C-Atomen ableiten, insbesondere Acrylsäuremethylester, Acrylsäureethylester, Acrylsäureisopropylester, Acrylsäure-n-propylester, Methacrylsäuremethylester und Methacrylsäureethylester, Acrylnitril, Methacrylnitril, Acrylamid und Methacrylamid. Auch Ester von anderen monoethylenisch ungesättigten Carbonsäuren sind als Monomere der Gruppe (c) geeignet, beispielsweise Maleinsäuredimethylester.

Die mittlere Molmasse M_{w} der wasserlöslichen Copolymerisate beträgt mehr als 50000, beispielsweise 55000 bis 2 Mio. Bevorzugt werden erfindungsgemäß Copolymerisate einer mittleren Molmasse M_{w} von 75000 bis 500000 eingesetzt. Die bevorzugt verwendeten Copolymerisate enthalten
0 bis 20 Mol-% andere monoethylenisch ungesättigte Monomere (c)
einpolymerisiert, wobei die Summe aus (a), (b) und (c) immer 100 beträgt. Die oben beschriebenen Copolymerisate sind in Mengen von 0,05 bis 5,0, vorzugsweise 0,1 bis 2,0 Gew.-% in Waschmittelformulierungen enthalten. Sie wirken beim Waschen von farbigen Textilien in der Waschflotte als Farbübertragungsinhibitor. Sie werden sowohl in Vollwaschmitteln als auch in Colorwaschmitteln eingesetzt. In farbschonenden Colorwaschmitteln sind die erfindungsgemäß zu verwendenden Copolymerisate meistens in Mengen von 0,1 bis 1,5, vorzugsweise 0,2 bis 1,0 Gew.-% enthalten.

Die Waschmittel, die die erfindungsgemäß zu verwendenden Copolymerisate enthalten, können pulverförmig sein oder auch in flüssiger Einstellung vorliegen. Sie enthalten die üblicherweise verwendeten anionischen und/oder nichtionischen Tenside in Mengen von 2 bis 50, vorzugsweise 8 bis 30 Gew.-%. Besonders bevorzugt werden phosphatfreie oder phosphatreduzierte Waschmittel hergestellt, die einen Phosphatgehalt von höchstens 25 Gew.-%, berechnet als Pentanatriumtriphosphat, enthalten. Die Waschmittel können auch in Granulatform vorliegen oder als sogenannte Kompaktwaschmittel vorliegen, die eine Dichte von 500 bis 950 g/l haben.

Bei den Waschmitteln kann es sich um Vollwaschmittel oder um Spezialwaschmittel handeln. Als Tenside kommen sowohl anionische als auch nichtionische oder Mischungen aus anionischen und nichtionischen Tensiden in Betracht. Der Tensidgehalt der Waschmittel beträgt vorzugsweise 8 bis 30 Gew.-%.

Geeignete anionische Tenside sind beispielsweise Fettalkoholsulfate von Fettalkoholen mit 8 bis 22, vorzugsweise 10 bis 18 Kohlenstoffatomen, z.B. C₉- bis C₁₁-Alkoholsulfate, C₁₂- bis C₁₃-Alkoholsulfate, Cetylsulfat, Myristylsulfat, Palmitylsulfat, Stearylsulfat und Talgfettalkoholsulfat.

Weitere geeignete anionische Tenside sind sulfatierte, ethoxylierte C₈- bis C₂₂-Alkohole bzw. deren lösliche Salze. Verbindungen dieser Art werden beispielsweise dadurch hergestellt, daß man zunächst einen C₈- bis C₂₂-, vorzugsweise einen C₁₀- bis C₁₈-Alkohol alkoxyliert und das Alkoxylierungsprodukt anschließend sulfatiert. Für die Alkoxylierung verwendet man vorzugsweise Ethylenoxid, wobei man pro Mol Fettalkohol 2 bis 50, vorzugsweise 3 bis 20 Mol, Ethylenoxid einsetzt. Die Alkoxylierung der Alkohole kann jedoch auch mit Propylenoxid allein und gegebenenfalls Butylenoxid durchgeführt werden. Geeignet sind außerdem solche alkoxylierte C₈- bis C₂₂-Alkohole, die Ethylenoxid und Propylenoxid oder Ethylenoxid und Butylenoxid enthalten. Die alkoxylierten C₈- bis C₂₂-Alkohole können die Ethylenoxid-, Propylenoxid- und Butylenoxideinheiten in Form von Blöcken oder in statistischer Verteilung enthalten.

Weitere geeignete anionische Tenside sind Alkylsulfonate wie C₈bis C₂₄-, vorzugsweise C₁₀-C₁₈-Alkansulfonate sowie Seifen wie beispielsweise die Salze von C₈- bis C₂₄-Carbonsäuren.

Weitere geeignete anionische Tenside sind C-₉- bis C₂₀-linear-Alkylbenzolsulfonate (LAS). Vorzugsweise werden die erfindungsgemäßen Polymeren in LAS-armen Waschmittelformulierungen mit weniger als 4 %, besonders bevorzugt in LAS-freien Formulierungen eingesetzt.

Die anionischen Tenside werden dem Waschmittel vorzugsweise in Form von Salzen zugegeben. Geeignete Kationen in diesen Salzen sind Alkalimetallionen wie Natrium-, Kalium-, Lithium- und Ammoniumionen wie z.B. Hydroxyethylammonium-, Di(hydroxyethyl)ammonium- und Tri(hydroxyethyl)ammoniumionen.

Als nichtionische Tenside eignen sich beispielsweise alkoxylierte C₈- bis C₂₂-Alkohole. Die Alkoxylierung kann mit Ethylenoxid, Propylenoxid und/oder Butylenoxid durchgeführt werden. Als Tensid einsetzbar sind hierbei sämtliche alkoxylierten Alkohole, die mindestens zwei Moleküle eines vorstehend genannten Alkylenoxids addiert enthalten. Auch hierbei kommen Blockpolymerisate von Ethylenoxid, Propylenoxid und/oder Butylenoxid in Betracht oder Anlagerungsprodukte, die die genannten Alkylenoxide in statistischer Verteilung enthalten. Pro Mol Alkohol verwendet man 2 bis 5, vorzugsweise 3 bis 20 Mol mindestens eines Alkylenoxids. Vorzugsweise setzt man als Alkylenoxid Ethylenoxid ein. Die Alkohole haben vorzugsweise 10 bis 18 Kohlenstoffatomen.

Eine andere Klasse nichtionischer Tenside sind Alkylpolyglucoside mit 8 bis 22, vorzugsweise 10 bis 18 Kohlenstoffatomen in der Alkylkette. Diese Verbindungen enthalten 1 bis 20, vorzugsweise 1,1 bis 5 Glucosideinheiten.

Eine andere Klasse nichtionischer Tenside sind N-Alkylglucamide der allgemeinen Struktur II bzw. III 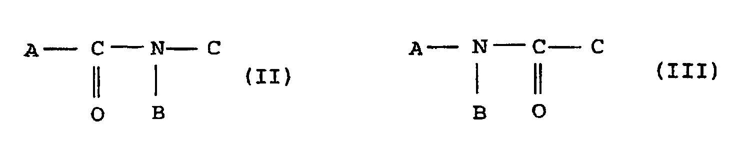 wobei A ein C₆- bis C₂₂-Alkyl, B ein H oder C₁- bis C₄-Alkyl und C ein Polyhydroxyalkyl-Rest mit 5 bis 12 C-Atomen und mindestens 3 Hydroxygruppen ist. Vorzugsweise steht A für C₁₀- bis C₁₈-Alkyl-, B für CH₃- und C für einen C₅- oder C₆-Rest. Beispielsweise erhält man derartige Verbindungen durch die Acylierung von reduzierend aminierten Zuckern mit Säurechloriden von C₁₀-C₁₈-Carbonsäuren. Die Waschmittelformulierungen enthalten vorzugsweise mit 3-12 Mol Ethylenoxid ethoxylierte C₁₀-C₁₆-Alkohole, besonders bevorzugt ethoxylierte Fettalkohole als nichtionische Tenside.

Die pulver- oder granulatförmigen Waschmittel sowie gegebenenfalls auch strukturierte Flüssigwaschmittel enthalten außerdem einen oder mehrere anorganische Builder. Als anorganische Buildersubstanzen eignen sich alle üblichen anorganischen Builder wie Alumosilikate, Silikate, Carbonate und Phosphate.

Geeignete anorganische Builder sind z.B. Alumosilikate mit ionenaustauschenden Eigenschaften wie z.B. Zeolithe. Verschiedene Typen von zeolithen sind geeignet, insbesondere Zeolith A, X, B, P, MAP und HS in ihrer Na-Form oder in Formen, in denen Na teilweise gegen andere Kationen wie Li, K, Ca, Mg oder Ammonium ausgetauscht sind. Geeignete Zeolithe sind beispielsweise beschrieben in EP-A-0 038 591, EP-A-0 021 491, EP-A-0 087 035, US-A-4 604 224, GB-A-2 013 259, EP-A-0 522 726, EP-A-0 384 070A und WO-A-94/24251.

Weitere geeignete anorganische Builder sind z.B. amorphe oder kristalline Silikate wie z.B. amorphe Disilikate, kristalline Disilikate wie das Schichtsilikat SKS-6 (Hersteller Hoechst AG). Die Silikate können in Form ihrer Alkali-, Erdalkali- oder Ammoniumsalze eingesetzt werden. Vorzugsweise werden Na-, Li- und Mg-Silikate eingesetzt.

Weitere geeignete anorganische Buildersubstanzen sind Carbonate und Hydrogencarbonate. Diese können in Form ihrer Alkali-, Erdalkali- oder Ammoniumsalze eingesetzt werden. Vorzugsweise werden Na-, Li- und Mg-Carbonate bzw. Hydrogencarbonate, insbesondere Natriumcarbonat und/oder Natriumhydrogencarbonat eingesetzt.

Die anorganischen Builder können in den Waschmitteln in Mengen von 5 bis 60 Gew.-% zusammen mit den organischen Cobuildern enthalten sein. Die anorganischen Builder können entweder allein oder in beliebigen Kombinationen miteinander in das Waschmittel eingearbeitet werden. In pulver- oder granulatförmigen Waschmitteln werden sie in Mengen von 10 bis 60 Gew.-%, vorzugsweise in Mengen von 20 bis 50 Gew.-% zugesetzt. In strukturierten (mehrphasigen) Flüssigwaschmitteln werden anorganische Builder in Mengen bis zu 40 Gew.-%, vorzugsweise bis zu 20 Gew.-% eingesetzt. Sie werden in den flüssigen Formulierungsbestandteilen suspendiert.

Die Waschmittel enthalten zusätzlich einen oder mehrere organische Cobuilder. Dabei handelt es sich um niedrigmolekulare polymere Polycarboxylate.

Geeignete polymere Polycarboxylate sind beispielsweise
(1) Polymaleinsäuren, die durch Polymerisieren von Maleinsäureanhydrid in aromatischen Kohlenwasserstoffen in Gegenwart von Radikale bildenden Initiatoren und anschließende Hydrolyse der Anhydridgruppen des Polymerisats erhältlich sind, vgl. beispielsweise EP-A-0 451 508, EP-A-0 396 303. Die Molmasse der Polymaleinsäuren beträgt vorzugsweise 800 bis 5000.
(2) Copolymere ungesättigter C₄- bis C₈-Dicarbonsäuren, wobei als Comonomere
   i) monoethylenisch ungesättigte C₃- bis C₈-Monocarbonsäuren wie z.B. Acrylsäure, Methacrylsäure, Crotonsäure und Vinylessigsäure, bevorzugt Acrylsäure und Methacrylsäure,
   ii) C₂- bis C₂₂-Monoolefine, Vinylalkylether mit C₁- bis C₈-Alkylgruppen, Styrol, Vinylester von C₁-C₈-Carbonsäuren, (Meth)acrylamid und Vinylpyrrolidon, bevorzugt C₂- bis C₆-α-Olefine, Vinylalkylether mit C₁- bis C₄-Alkylgruppen, Vinylacetat und Vinylpropionat,Hydroxyalkylacrylate, wie Hydroxyethylacrylat, Hydroxy-n-propylacrylat, Hydroxybutylacrylat, Hydroxyisobutylacrylat, Hydroxyethylmethacrylat, Hydroxypropylmethacrylat oder Hydroxyisopropylacrylat,
   iii) (Meth)acrylester von einwertigen C₁- bis C₈-Alkoholen, (Meth)acrylnitril, (Meth)acrylamide von C₁-C₈-Aminen, N-Vinylformamid und N-Vinylimidazol
   in Betracht kommen. Als ungesättigte C₄- bis C₈-Dicarbonsäuren sind beispielsweise Maleinsäure, Fumarsäure, Itaconsäure und Citraconsäure geeignet. Bevorzugt ist Maleinsäure. Die Copolymerisate können die Monomeren der Gruppe
   i) in Mengen bis zu 95 %,
   ii) in Mengen bis zu 60 % und
   iii) in Mengen bis zu 20 %
   einpolymerisiert enthalten. Die Copolymeren können Einheiten von 2, 3, 4 oder gegebenenfalls auch 5 verschiedenen Monomeren enthalten.
   Falls die Polymeren der Gruppe ii) Vinylester einpolymerisiert enthalten, können diese auch teilweise oder vollständig zu Vinylalkoholeinheiten hydrolysiert vorliegen. Geeignete Co- und Terpolymere sind beispielsweise aus US-A-3 887 806 sowie DE-A-4 313 909 bekannt.
   Als Copolymere von Dicarbonsäuren eignen sich vorzugsweise
   - Copolymere aus Maleinsäure und Acrylsäure im Gewichtsverhältnis 10:90 bis 95:5, besonders bevorzugt solche im Gewichtsverhältnis 30:70 bis 90:10 und Molmassen von vorzugsweise bis zu 10 000. Besonders bevorzugt sind solche Copolymerisate, die Molmassen M_{w} von 1000 bis 6000 haben.
   - Terpolymere aus Maleinsäure, Acrylsäure und einem Vinylester einer C₁- bis C₃-Carbonsäure im Gewichtsverhältnis 10 (Maleinsäure) : 90 (Acrylsäure + Vinylester) bis 95 (Maleinsäure) : 10 (Acrylsäure + Vinylester), wobei das Gewichtsverhältnis von Acrylsäure zu Vinylester im Bereich von 20:80 bis 80:20 variieren kann, und - besonders bevorzugt
   - Terpolymere aus Maleinsäure, Acrylsäure und Vinylformiat, Vinylacetat oder Vinylpropionat im Gewichtsverhältnis 20 (Maleinsäure) : 80 (Acrylsäure + Vinylester) bis 90 (Maleinsäure : 10 (Acrylsäure + Vinylester), wobei das Gewichtsverhältnis von Acrylsäure zu Vinylester im Bereich von 30:70 bis 70:30 variieren kann. Die Molmassen M_{w} der Terpolymerisate betragen vorzugsweise bis zu 10.000, insbesondere 1000 bis 7000.
   - Copolymere von Maleinsäure mit C₂- bis C₈-α-Olefinen im Molverhältnis 40:60 bis 80:20, wobei Copolymere aus Maleinsäure und Ethylen, Propylen, Isobuten oder Diisobuten im Molverhältnis 50:50 besonders bevorzugt sind. Die Molmassen M_{w} dieser Polymerisate liegen vorzugsweise in dem Bereich von 1000 bis 7000.
(3) Pfropfpolymere ungesättigter Carbonsäuren auf niedrigmolekulare Kohlehydrate bzw. hydrierte Kohlehydrate, vgl. US-A-5 227 446, DE-A-4 415 623, und DE-A-4 313 909.
   Geeignete ungesättigte Carbonsäuren sind beispielsweise Maleinsäure, Fumarsäure, Itaconsäure, Citraconsäure, Acrylsäure, Methacrylsäure, Crotonsäure und Vinylessigsäure sowie Mischungen aus Acrylsäure und Maleinsäure, die beispielsweise in Mengen von 40 bis 95 Gew.-%, bezogen auf die zu pfropfende Komponente, aufgepfropft werden. Zur Modifizierung können zusätzlich bis zu 30 Gew.-%, bezogen auf die zu pfropfende Komponente, weitere monoethylenisch ungesättigte Monomere einpolymerisiert vorliegen. Geeignete modifizierende Monomere sind die oben genannten Monomeren der Gruppen ii) und iii) sowie Acrylamido-2-methylpropansulfonsäure oder Natriumvinylsulfonat.
   Als Pfropfgrundlage sind abgebaute Polysaccharide wie z.B. saure oder enzymatisch abgebaute Stärken, Inuline oder Zellulose, reduzierte (hydrierte oder hydrierend aminierte) abgebaute Polysaccharide wie z.B. Mannit, Sorbit, Aminosorbit und Glucamin sowie Zucker, z.B. Glucose, geeignet sowie Polyalkylenglycole mit Molmassen bis zu Mw = 5000 wie z.B. Polyethylenglykole, Ethylenoxid/Propylenoxid- bzw. Ethylenoxid/Butylenoxid-Blockcopolymere, statistische Ethylenoxid/Propylenoxid- bzw. Ethylenoxid/Butylenoxid-Copolymere, alkoxylierte ein- oder mehrwertige C₁- bis C₂₂-Alkohole, vgl. US-A-4,746,456.
   Bevorzugt werden aus dieser Gruppe gepfropfte abgebaute bzw. abgebaute reduzierte Stärken und gepfropfte Polyethylenoxide eingesetzt, wobei 20 bis 80 Gew.-% Monomere, bezogen auf die Pfropfkomponente bei der Pfropfpolymerisation eingesetzt werden. Zur Pfropfung wird vorzugsweise eine Mischung von Maleinsäure und Acrylsäure im Verhältnis von 90:10 bis 10:90 eingesetzt. Die Molmassen M_{w} der Pfropfpolymerisate betragen vorzugsweise bis zu 10.000 und insbesondere 1000 bis 7000.
(4) Polyglyoxylsäure vgl. beispielsweise EP-B-0 001 004, US-A-5,399,286, DE-A-4 106 355 und EP-A-0 656 914. Die Endgruppen der Polyglyoxylsäuren können unterschiedliche Strukturen aufweisen. Die Polymeren haben vorzugsweise Molmassen M_{w} bis zu 10.000, insbesondere von 1000 bis 7000.
(5) Polyamidocarbonsäuren und modifizierte Polyamidocarbonsäuren vgl. beispielsweise EP-A-0 454 126, EP-B-0 511 037, WO-A-94/01486 und EP-A-0 581 452.
   Vorzugsweise verwendet man Polyasparaginsäure bzw. Cokondensate der Asparaginsäure mit weiteren Aminosäuren, C₄- bis C₂₅-Mono- oder Dicarbonsäuren, C₄- bis C₂₅-Mono- oder Diaminen. Besonders bevorzugt werden in phosphorhaltigen Säuren hergestellte mit C₆- bis C₂₂-Mono- oder Dicarbonsäuren bzw. mit C₆- bis C₂₂-Mono- oder Diaminen modifizierte Polyasparaginsäuren eingesetzt. Besonders bevorzugt sind solche modifizierten Polyasparaginsäuren, die durch Kondensieren von Asparaginsäure mit 5 bis 25 Mol-%, bezogen auf Asparaginsäure, Tridecylamin oder Oleylamin und mindestens 5 Gew.-%, bezogen auf Asparaginsäure, Phosphorsäure oder phosphorige Säure bei Temperaturen von 150 bis 230°C und Hydrolysieren und Neutralisieren der Cokondensate erhältlich sind. Die Molmassen M_{w} der Polykondensate betragen vorzugsweise bis zu 10.000 und insbesondere 1000 bis 7000.
(6) Kondensationsprodukte der Zitronensäure mit Hydroxycarbonsäuren oder Polyhydroxyverbindungen vgl. z.B. WO-A-93/22362 und WO-A-92/16493. Solche Carboxylgruppen enthaltenden Kondensate haben Molmassen M_{w} bis zu 10000, vorzugsweise bis zu 5000.

Die organischen Cobuilder sind in den pulver- oder granulatförmigen sowie in den strukturierten flüssigen Waschmittelformulierungen in Mengen von 0,5 bis 15 Gew.-%, vorzugsweise in Mengen von 1 bis 8 Gew.-% zusammen mit anorganischen Buildern enthalten. In flüssigen Waschmittelformulierungen sind organische Cobuilder in Mengen von 0,5 bis 20 Gew.-%, vorzugsweise in Mengen von 1 bis 10 Gew.-%, besonders bevorzugt in Mengen von 1,5 bis 7,5 Gew.-% enthalten.

Die pulver- oder granulatförmigen Vollwaschmittel enthalten außerdem ein Bleichsystem bestehend aus mindestens einem Bleichmittel, gegebenenfalls in Kombination mit einem Bleichaktivator und/oder einem Bleichkatalysator.

Geeignete Bleichmittel sind Perborate und Percarbonate in Form ihrer Alkali- insbesondere ihrer Na-Salze. Sie sind in Mengen von 5 bis 30 Gew.-%, vorzugsweise 10 bis 25 Gew.-% in den Formulierungen enthalten. Weitere geeignete Bleichmittel sind anorganische und organische Persäuren in Form ihrer Alkali- oder Magnesiumsalze oder teilweise auch in Form der freien Säuren. Beispiele für geeignete organische Percarbonsäuren bzw. -Salze sind z.B. Mg-Monoperphthalat, Phthalimidopercapronsäure und Dodecan-1,10-dipersäure. Beispiel für ein anorganisches Persäuresalz ist Kaliumperoxomonosulfat (Oxon).

Geeignete Bleichaktivatoren sind z.B.
- Acylamine wie Tetraacetylethylendiamin, Tetraacetylglycoluril, N,N'-Diacetyl-N,N'-dimethylharnstoff und 1,5-Diacetyl-2,4-dioxohexahydro-1,3,5-triazin
- acylierte Lactame wie beispielsweise Acetylcaprolactam, Octanoylcaprolactam und Benzoylcaprolactam
- substituierte Phenolester von Carbonsäuren wie z.B. Na-acetoxybenzolsulfonat, Na-octanoyloxybenzolsulfonat und Na-nonanoyloxybenzolsulfonat
- acylierte Zucker wie z.B. Pentaacetylglucose
- Anthranilderivate wie z.B. 2-Methylanthranil oder 2-Phenylanthranil
- Enolester wie z.B. Isopropenylacetat
- Oximester wie z.B. O-Acetylacetonoxim
- Carbonsäureanhydride, wie z.B. Phthalsäureanhydrid oder Essigsäureanhydrid.

Vorzugsweise werden Tetraacetylethylendiamin und Na-nonanoyloxybenzolsulfonate als Bleichaktivatoren eingesetzt. Die Bleichaktivatoren werden Vollwaschmitteln in Mengen von 0,1 bis 15 Gew.-%, vorzugsweise in Mengen von 1,0 bis 8,0 Gew.-%, besonders bevorzugt in Mengen von 1,5 bis 6,0 Gew.-% zugesetzt.

Geeignete Bleichkatalysatoren sind quaternisierte Imine und Sulfonimine wie sie in US-A-5 360 568, US-A-5 360 569 und EP-A-0 453 003 beschrieben sind und Mn-Komplexe, vgl. z.B. WO-A-94/21777. Falls Bleichkatalysatoren in den Waschmittelformulierungen eingesetzt werden, sind sie darin in Mengen bis zu 1,5 Gew.-%, vorzugsweise bis zu 0,5 Gew.-%, im Falle der sehr aktiven Mangankomplexe in Mengen bis zu 0,1 Gew.% enthalten.

Die Waschmittel enthalten vorzugsweise ein Enzymsystem. Dabei handelt es sich um üblicherweise in Waschmitteln eingesetzte Proteasen, Lipasen, Amylasen sowie Cellulasen. Das Enzymsystem kann auf ein einzelnes Enzym beschränkt sein oder eine Kombination verschiedener Enzyme beinhalten. Von den handelsüblichen Enzymen werden den Waschmitteln in der Regel Mengen von 0,1 bis 1,5 Gew.-%, vorzugsweise 0,2 bis 1,0 Gew.-% des konfektionierten Enzyms zugesetzt. Geeignete Proteasen sind z.B. Savinase und Esperase (Hersteller Novo Nordisk). Eine geeignete Lipase ist z.B. Lipolase (Hersteller Novo Nordisk). Eine geeignete Cellulase ist z.B. Celluzym (Hersteller Novo Nordisk).

Die Waschmittel enthalten außerdem vorzugsweise Soil-release Polymere und/oder Vergrauungsinhibitoren. Dabei handelt es sich z.B. um
- Polyester aus Polyethylenoxiden mit Ethylenglykol und/oder Propylenglykol und aromatischen Dicarbonsäuren oder aromatischen und aliphatischen Dicarbonsäuren. Polyester aus einseitig endgruppenverschlossenen Polyethylenoxiden mit zwei- und/oder mehrwertigen Alkoholen und Dicarbonsäuren. Derartige Polyester sind bekannt, vgl. beispielsweise US-A-3 557 039, GB-A-1 154 730, EP-A-0 185 427, EP-A-0 241 984, EP-A-0 241 985, EP-A-0 272 033 und US-A-5 142 020.

Weitere geeignete Soil-release Polymere sind amphiphile Pfropf-oder Copolymere von Vinyl- und/oder Acrylester auf Polyalkylenoxiden, vgl. US-A-4 746 456, US-A-4 846 995, DE-A-3 711 299, US-A-4 904 408, US-A-4 846 994 und US-A-4 849 126 oder modifizierte Cellulosen wie z.B. Methylcellulose, Hydroxypropylcellulose oder Carboxymethylcellulose.

Vergrauungsinhibitoren und Soil-release Polymere sind in den Waschmittelformulierungen zu 0 bis 2,5 Gew.-%, vorzugsweise zu 0,2 bis 1,5 Gew.-%, besonders bevorzugt zu 0,3 bis 1,2 Gew.-% enthalten. Bevorzugt eingesetzte Soil-release Polymere sind die aus der US-A-4 746 456 bekannten Pfropfpolymeren von Vinylacetat auf Polyethylenoxid der Molmasse 2500 - 8000 im Gewichtsverhältnis 1,2:1 bis 3,0:1, sowie handelsübliche Polyethylenterephthalat/polyoxyethylenterephthalate der Molmasse 3000 bis 25000 aus Polyethylenoxiden der Molmasse 750 bis 5000 mit Terephthalsäure und Ethylenoxid und einem Molverhältnis von Polyethylenterephthalat zu Polyoxyethylenterephthalat von 8:1 bis 1:1 und die aus der DE-A-4 403 866 bekannten Blockpolykondensate, die Blöcke aus (a) Ester-Einheiten aus Polyalkylenglykolen einer Molmasse von 500 bis 7500 und aliphatischen Dicarbonsäuren und/oder Monohydroxymonocarbonsäuren und (b) Ester-Einheiten aus aromatischen Dicarbonsäuren und mehrwertigen Alkoholen enthalten. Diese amphiphilen Blockcopolymerisate haben Molmassen von 1500 bis 25000.

Die erfindungsgemäß als Farbübertragungsinhibitor in Waschmitteln zu verwendenden Copolymerisate werden vorzugsweise in solchen Waschmitteln eingesetzt, deren Tensidsystem frei von Alkylbenzolsulfonaten ist. Im Gegensatz zu den aus der EP-A-635 565 bekannten Copolymerisaten aus N-Vinylimidazol und N-Vinylpyrrolidon mit einem Gehalt an einpolymerisiertem N-Vinylimidazol von mindestens 20 % ist die Wirkung von Enzymen, insbesondere Proteasen und Cellulosen, in Waschmitteln, die die erfindungsgemäß zu verwendenden Copolymerisate enthalten, überraschenderweise verbessert. Die erfindungsgemäß zu verwendenden Copolymerisate werden daher mit Vorteil in Waschmittel eingesetzt, die Enzyme enthalten. Die erfindungsgemäß zu verwendenden Copolymerisate haben überraschenderweise trotz der niedrigeren Anteile an Vinylimidazol oder 4-Vinylpyridin-N-oxid-Einheiten eine sehr gute Farbübertragungsinhibierende Wirkung, die diejenige von Homopolymerisaten aus Vinylpyrrolidon oder Vinyloxazolidon deutlich übertrifft. Es war ferner nicht vorher zu sehen, daß hohe Anteile an anionischen Tensiden und Polycarboxylaten in Waschmitteln die Wirksamkeit der erfindungsgemäß zu verwendenden Copolymerisate nicht oder nicht so stark beeinträchtigen, wie die Wirksamkeit der bekannten Copolymerisate aus Vinylimidazol und Vinylpyrrolidon. Ein weiterer überraschender Vorteil der erfindungsgemäß zu verwendenden Copolymerisate ist ihre geringere farbablösende Wirkung im Vergleich zu den bekannten Copolymerisaten aus N-Vinylimidazol und N-Vinylpyrrolidon mit einem höheren Gehalt an N-Vinylimidazol, insbesondere solchen mit Molmassen unter 50.000.

Die Molmassen M_{w} wurden bestimmt durch Lichtstreuung. Die Prozentangaben in den Beispielen bedeuten Gew.-%, sofern aus dem Zusammenhang nichts anderes hervorgeht.

### Herstellung der Polymeren

### Polymer 1

360 g N-Vinylpyrrolidon (VP), 40 g N-Vinylimidazol (VI) werden in 930 g Wasser gelöst. Durch diese Mischung leitet man Stickstoff, um sie weitgehend von Sauerstoff zu befreien. Unter Stickstoffatmosphäre wird auf 85°C geheizt. Zu dieser Mischung gibt man innerhalb von zwei Stunden eine Lösung von 8 g 2,2'-Azobis(2-methylbutyronitril) in 50 ml i-Propanol zu. Im gleichen Zeitraum wird parallel eine 4 gew.-%ige wäßrige Lösung von 2-Mercaptoethanol zugetropft. Anschließend wird eine Stunde bei 85°C gerührt. Danach senkt man die Temperatur auf 60°C und gibt gleichzeitig 4 g einer 70 gew.-%igen wäßrigen Lösung von t-Butylhydroperoxid und eine Lösung von 2,8 g Natriumbisulfit in 50 g Wasser hinzu. Jetzt wird eine weitere Stunde bei 60°C gerührt. Abschließend wird durch Wasserdampfdestillation desodoriert. Nach Gefriertrocknung erhält man 395,7 g eines farblosen Pulvers. Die mittlere Molmasse M_{w} des Copolymerisats beträgt 84.000.

### Polymer 2

340 g N-Vinylpyrrolidon, 60 g N-Vinylimidazol werden in 930 g Wasser gelöst. Durch diese Mischung leitet man Stickstoff, um sie weitgehend von Sauerstoff zu befreien. Unter Stickstoffatmosphäre wird auf 85°C geheizt. Zu dieser Mischung gibt man innerhalb von zwei Stunden eine Lösung von 2 g 2,2'-Azobis(2-methylbutyronitril) in 50 ml i-Propanol zu. Anschließend wird eine Stunde bei 85°C gerührt. Danach senkt man die Temperatur auf 60°C und gibt gleichzeitig 4 g einer 70 gew.-%igen wäßrigen Lösung von t-Butylhydroperoxid und eine Lösung von 2,8 g Natriumbisulfit in 50 g Wasser hinzu. Jetzt wird eine weitere Stunde bei 60°C gerührt. Abschließend wird durch Wasserdampfdestillation desodoriert. Nach Gefriertrocknung erhält man 392,5 g eines farblosen Pulvers. Die mittlere Molmasse M_{w} des Copolymerisats beträgt 900.000.

### Polymer 3

In einem 4 l fassenden Kolben, der mit einem Rührer, Rückflußkühler und Thermometer ausgestattet war, wurden 3600 g Wasser und 30 g Vinylpyrrolidon vorgelegt. Durch diese Mischung leitet man Stickstoff, um Sauerstoff zu entfernen. Es wird auf 73°C aufgeheizt und innerhalb von drei Stunden gibt man zwei getrennte Zuläufe zu der gerührten Reaktionsmischung.

Zulauf 1 besteht aus 24 g N-Vinylimidazol (VI) und 486 g N-Vinylpyrrolidon (VP). Zulauf 2 ist eine Lösung von 2 g 2,2'-Azobis(2-amidinopropan)dihydrochlorid in 25 g Wasser. Nach Zulaufende wird 2 Stunden nachpolymerisiert.

Abschließend wird wasserdampfdestilliert. Nach Gefriertrocknung erhält man 539 g eines farblosen Pulvers. Die mittlere Molmasse M_{w} des Copolymerisats beträgt 1,5 Millionen.

Polymer 4 (Vergleich nach dem Stand der Technik) Copolymer N-Vinylimidazol N-Vinylpyrrolidon (Gewichtsverhältnis 1:1) der Molmasse 15.000

Zu einer Monomerenmischung von 30 g Vinylimidazol und 30 g Vinylpyrrolidon gibt man 150 g Wasser. Unter Stickstoffatmosphäre wird die Mischung unter Rühren auf 85°C aufgeheizt. Jetzt tropft man gleichzeitig eine 5 gew.,-%ige i-propanolische Lösung von 1 g 2,2'-Azobis(2-methylbutyronitril) und 2,2 g 2-Mercaptoethanol, in 5o g Wasser gelöst, zu. Nach beendeter Zugabe wird zwei Stunden bei 85°C gerührt.

Danach senkt man die Temperatur auf 60°C und gibt gleichzeitig 0,6 g einer 70 gew.-%igen wäßrigen Lösung von t-Butylhydroperoxid und eine Lösung von 0,4 g Natriumbisulfit in 8 g Wasser hinzu. Jetzt wird eine weitere Stunde bei 60°C gerührt. Abschließend wird durch Wasserdampfdestillation desodoriert. Nach Gefriertrocknung erhält man 58,6 g eines farblosen Pulvers.

Polymer 5 (Vergleich nach dem Stand der Technik) Polyvinylpyrrolidon-Homopolymer der Molmasse 40.000.

Die erfindungsgemäß zu verwendenden Copolymerisate wurden als Zusatz zu den in Tabelle 1 angegebenen Vollwaschmitteln eingesetzt.

**Tabelle 1**

| | I | II | III | IV | V | VI | VII |
|---|---|---|---|---|---|---|---|
| Polymer 1 | 1,5 | | 1,0 | 0,5 | | | |
| Polymer 2 | | 1,0 | | | | 0,6 | |
| Polymer 3 | | | | | 1,0 | | 1,0 |
| AS/MS (70000) | 7,5 | | 5,0 | | 5,0 | | |
| AS/MS/VAc-Terpolymer (40000) | | | | | | 5,0 | |
| Oligomaleinsäure | | | | | 5,0 | | |
| Polyasparaginsäure | 7,5 | | | | | | 5,0 |
| Na-Perborat-Monohydrat | 15 | 15 | | | 15 | | 7,5 |
| Na-Percarbonat | | | 18 | 15 | | 18 | |
| TAED | | 3,8 | | 5,0 | | 4,2 | 2,0 |
| NOBS | 4,0 | | 5,0 | | 2,9 | | |
| Na-Laurylsulfat | | 6,0 | 12,0 | 6,0 | | | |
| lineares Alkylbenzolsulfonat Na-Salz | 3,1 | 1,7 | 0,8 | | | 6,5 | |
| sulfatiertes Fettalkoholethoxylat | | | | | 5,5 | | |
| Seife | 2,8 | 0,6 | 0,4 | 2,5 | 1,5 | | 2,4 |
| C₁₃/C₁₅-Oxoalkohol*3 EO | | 3,0 | | | | | |
| C₁₃/C₁₅-Oxoalkohol*7 EO | 4,7 | | 4,7 | 13,5 | 4,0 | 6,5 | |
| C₁₃/C₁₅-Oxoalkohol*10 EO | | 3,0 | | | | | |
| C₁₂/C₁₄-Fettalkohol*7 EO | | | | | | | 10,0 |
| Laurylalkohol*13 EO | | | | | | 5,0 | |
| Zeolit A | 25 | 25 | 15 | | 30 | 15 | 35 |
| Zeolit P | | | | 40 | | | |
| SKS-6 | | | 14 | | | 15 | |
| Na-Disilikat | 2,5 | 3,9 | | 0,5 | 4,5 | | 1,5 |
| Mg-Silikat | 1,0 | | 0,8 | | 1,0 | 1,0 | 0,6 |
| Natriumsulfat | 20 | 2,5 | 3,2 | 2,0 | 1,5 | 5,5 | 3,4 |
| Natriumhydrogencarbonat | | | 9,0 | 6,5 | | | |
| Natriumcarbonat | 12,0 | 13,6 | | | 10,0 | 8,0 | 9,8 |
| Sokalan®HP 22 | | 0,4 | | | 0,5 | | |
| Polyethylenterephthalat/oxyethylenterephthalat | 1,0 | | | | 0,5 | 0,8 | 1,0 |
| Carboxymethylcellulose | 0,6 | 1,3 | 0,6 | 1,0 | 0,6 | 0,6 | 0,5 |
| Dequest® 2046 (Phosphonat) | | | | 0,5 | | | |
| Zitronensäure | | 6,8 | 5,0 | | | 2,5 | 3,8 |
| Lipase | | | | | 1,0 | | |
| Protease | | 1,0 | | | 1,0 | 0,5 | 0,6 |
| Cellulase | | | | | | | 0,6 |
| Wasser | auf 100 | auf 100 | auf 100 | auf 100 | auf 100 | auf 100 | auf 100 |

### Abkürzungen:

- TAED: Tetraacetylethylendiamin
- NOBS: Nonanoyl-oxy-benzolsulfonsäure-Na-Salz
- SKS-6: Schichtsilikat-Na-Salz (Hersteller Fa. Hoechst)
- EO: Ethylenoxid
- AS/MS (70000): = Acrylsäure/Maleinsäure-Copolymer im Gewichtsverhältnis 70:30 Molmasse M_{w} = 70.000
- AS/MS/VAc (40000): = Acrylsäure/Maleinsäure/Vinylacetat-Terpolymere im Molverhältnis 40:10:50 mit Molmasse M_{w} = 40.000
- Sokalan® HP 22: handelsübliches Pfropfpolymerisat von Vinylacetat auf Polyethylenglykol (Soil-release Polymer)

In Tabelle 2 ist die Zusammensetzung von Colorwaschmitteln angegeben, die erfindungsgemäß zu verwendende Copolymerisate enthalten.

**Tabelle 2**

| | VII | VIII | IX | X | XI | XII |
|---|---|---|---|---|---|---|
| Polymer 1 | 1,0 | 1,0 | 0,5 | 1,0 | 0,5 | 0,5 |
| AS/MS (70000) | 6,0 | 5,0 | 3,5 | | | 8,5 |
| Oligomaleinsäure | | | | 4,5 | 7,5 | |
| Na-Laurylsulfat | | 8,6 | 12,5 | | 15,5 | |
| lineares Alkylbenzolsulfonat Na-Salz | | 1,7 | | | | 7,5 |
| sulfatiertes Fettalkoholethoxylat | | | | 7,5 | | |
| Seife | 2,8 | | 3,0 | 1,5 | 1,5 | |
| C₁₃/C₁₅-Oxoalkohol*3 EO | | | | | 1,5 | |
| C₁₃/C₁₅-Oxoalkohol*7 EO | 6,7 | | 6,0 | 13,5 | 4,0 | 7,5 |
| C₁₃/C₁₅-Oxoalkohol*10 EO | | 6,3 | | | | |
| Laurylalkohol*13 EO | | | | 2,0 | | 5,0 |
| Zeolit A | 28 | 55 | 35 | | 37 | 18 |
| Zeolit P | | | | 36 | | |
| SKS-6 | | | 12 | | | |
| Na-Disilikat | 4,5 | | | 0,5 | 4,5 | |
| Mg-Silikat | 1,0 | | 1,0 | | 1.0 | 1,0 |
| Natriumsulfat | 24 | 5,8 | 11,5 | 2,0 | 4,5 | 7,5 |
| Natriumhydrogencarbonat | | | 6,5 | 6,5 | | |
| Natriumcarbonat | 12,0 | 6,0 | | | 10,0 | 9,0 |
| Carboxymethylcellulose | 0,6 | 0,5 | 0,6 | 1,0 | 0,6 | 0,6 |
| Sokalan®HP 22 | 1,0 | | | | | 0,5 |
| Polyethylenterephthalat/oxyethylenterephthalat | | | 1,0 | 0,5 | | 0,5 |
| Natriumcitrat | 2,0 | 9,0 | | | | 2,5 |
| Protease | 0,5 | 1,0 | | | | 1,0 |
| Cellulase | 1,0 | | 1,0 | | 0,8 | 1,0 |
| Wasser | auf 100 | auf 100 | auf 100 | auf 100 | auf 100 | auf 100 |
| Abkürzungen vgl. Legende zu Tabelle 1 | | | | | | |

### Anwendungstechnische Prüfungen

Zur Prüfung der farbübertragungsinhibierenden Wirkung wurden die Polymeren 1-3 in Waschmittel VIII im Vergleich zu einem VI/VP-Copolymer nach dem Stand der Technik als Farbübertragungsinhibitoren geprüft. In Tabelle 3 sind die Waschbedingungen und in Tabelle 4 die Ergebnisse angegeben.

Weißes Baumwoll-Prüfgewebe wurde unter den in Tabelle 3 genannten Waschbedingungen und unter Zusatz des Waschmittels VIII gemäß Tabelle 2 in Gegenwart von Farbstoff gewaschen. Der Farbstoff wurde als verdünnte Lösung der fertigen Waschflotte zugesetzt.

**Tabelle 3:**

| Waschbedingungen (Farbübertragungsinhibierung) | |
|---|---|
| Gerät | Launder-O-meter |
| Zyklen | 1 |
| Dauer | 30 min |
| Temperatur | 60°C |
| Wasserhärte | 3 mmol/l |
| Farbstoffeintrag | 2,5 g Farbgewebe |
| Prüfgewebe | 2,5 g Baumwollnessel (gebleicht) |
| Flottenmenge | 250 ml |
| Flottenverhältnis | 1:50 |
| Waschmittel | Nr. VIII aus Tab. 2 |
| Waschmittelkonzentration | 5,0 g/l |

Die Messung der Anfärbung des Prüfgewebes erfolgte photometrisch. Aus den an den einzelnen Prüfgeweben gemessenen Remissionswerten wurden nach dem in A. Kud, Seifen, Öle, Fette, Wachse, Band 119, 590-594 (1993) beschriebenen Verfahren die jeweiligen Farbstärken der Anfärbungen bestimmt.

**Tabelle 4:**

| Farbübertragungsinhibierung (Zahlenwerte sind Farbstärkeeinheiten) | | | | | | | |
|---|---|---|---|---|---|---|---|
| Beispiel Nr. | Wasch- mittel Nr. | Farbüber- tragungs- inhibitor | Direkt- schwarz 22 | Direkt- orange 39 | Direkt- schwarz 51 | Direktrot 212 | Direkt- blau 71 |
| 1 | VIII | Polymer 1 | 11,7 | 45,9 | 65,4 | 8,7 | 6,3 |
| 2 | VIII | Polymer 2 | 10,9 | 42,2 | 65,3 | 8,2 | 6,5 |
| 3 | VIII | Polymer 3 | 11,2 | 44,1 | 62,4 | 7,2 | 6,4 |
| Vergleichs-beispiel Nr. | | | | | | | |
| 1 | VIII | ohne | 188 | 173 | 156 | 110 | 145 |
| 2 | VIII | Polymer 4 | 10,5 | 48,2 | 64,8 | 7,3 | 6,5 |
| 3 | VIII | Polymer 5 | 22,5 | 76,6 | 91,7 | 16,0 | 8,3 |

Die Ergebnisse mit den erfindungsgemäß zu verwendenden Polymeren zeigen, daß im Falle der erfindungsgemäß zu verwendenden Farbübertragungsinhibitoren ausgezeichnete Ergebnisse bei der farbübertragungsinhibierenden Wirkung beobachtet werden.

Die Wirkung dieser Polymere ist deutlich höher als diejenige von reinem Polyvinylpyrrolidon (Polymer 5, Vergleichsbeispiel 3) und ist vergleichbar mit der Wirkung von Copolymeren mit hohen Vinylimidazolgehalten (Polymer 4, Vergleichsbeispiel 2).

## Patentansprüche

1. Verwendung von wasserlöslichen Copolymerisaten, die
(a) 5 bis 15 Mol-% N-Vinylimidazol oder 5 bis 17,5 Mol-% 4-Vinylpyridin-N-oxid,
(b) 95 bis 62,5 Mol-% N-Vinylpyrrolidon, N-Vinyloxazolidon, Methyl-N-vinylimidazol oder deren Mischungen und
(c) 0 bis 30 Mol-% andere monoethylenisch ungesättigte Monomere aus der Gruppe bestehend aus Vinylester gesättigter Carbonsäuren, Ester der Acrylsäure und Methacrylsäure, die sich jeweils von Alkoholen mit 1 bis 8 C-Atomen ableiten, Acrylnitril, Methacrylnitril, Acrylamid und Methacrylamid
einpolymerisiert enthalten, wobei die Summe von (a), (b) und (c) in Mol-% immer 100 beträgt, und die eine mittlere Molmasse M_{w} von mehr als 50000 haben, als Farbübertragungsinhibitoren in Waschmitteln.

2. Verwendung nach Anspruch 1, **dadurch gekennzeichnet, daß** die Copolymerisate eine mittlere Molmasse M_{w} von 55000 bis 2 Millionen haben.

3. Verwendung nach Anspruch 1 oder 2, **dadurch gekennzeichnet, daß** die Copolymerisate eine mittlere Molmasse M_{w} von 75000 bis 500000 haben.

4. Verwendung nach einem der Ansprüche 1 bis 3, **dadurch gekennzeichnet, daß** die Copolymerisate
(a) 5 bis 15 Mol-% N-Vinylimidazol,
(b) 62,5 bis 95 Mol-% N-Vinylpyrrolidon, N-Vinyloxazolidon, Methyl-N-Vinylimidazol oder deren Mischungen und
(c) 0 bis 20 Mol-% andere monoethylenisch ungesättigte Monomere aus der Gruppe bestehend aus Vinylester gesättigter Carbonsäuren, Ester der Acrylsäure und Methacrylsäure, die sich jeweils von Alkoholen mit 1 bis 8 C-Atomen ableiten, Acrylnitril, Methacrylnitril, Acrylamid und Methacrylamid einpolymerisiert enthalten, wobei die Summe aus (a), (b) und (c) immer 100 beträgt.

5. Verwendung nach einem der Ansprüche 1 bis 4, **dadurch gekennzeichnet, daß** die Copolymerisate
(a) 8 bis 15 Mol-% N-Vinylimidazol und
(b) 85 bis 92 Mol-% N-Vinylpyrrolidon
einpolymerisiert enthalten, wobei die Summe von (a) und (b) in Mol-% immer 100 beträgt.

6. Verwendung nach einem der Ansprüche 1 bis 5, **dadurch gekennzeichnet, daß** das Tensidsystem der Waschmittel frei von Alkylbenzolsulfonaten ist.

7. Verwendung nach einem der Ansprüche 1 bis 6, **dadurch gekennzeichnet, daß** die Waschmittel Enzyme enthalten.

## Claims

1. The use of water-soluble copolymers which comprise
(a) 5-15 mol% of N-vinylimidazole or 5-17.5 mol% of 4-vinylpyridine N-oxide units,
(b) 95-62.5 mol% of N-vinylpyrrolidone, N-vinyloxazolidone, methyl-N-vinylimidazole units or mixtures thereof and
(c) 0-30 mol% of other monoethylenically unsaturated monomer units from the group consisting of vinyl esters of saturated carboxylic acids, esters of acrylic acid and methacrylic acid derived, in each case, from alcohols having 1 to 8 carbon atoms, acrylonitrile, methacrylonitrile, acrylamide and methacrylamide,
where the total of (a), (b) and (c) in mol% is always 100, and which have an average molecular weight M_{w} of more than 50,000, as color transfer inhibitors in detergents.

2. The use as claimed in claim 1, wherein the copolymers have an average molecular weight M_{w} of from 55,000 to 2 million.

3. The use as claimed in claim 1 or 2, wherein the copolymers have an average molecular weight M_{w} of 75,000 to 500,000.

4. The use as claimed in any of claims 1 to 3, wherein the copolymers comprise
(a) 5-15 mol% of N-vinylimidazole,
(b) 62.5-95 mol% of N-vinylpyrrolidone, N-vinyloxazolidone, methyl-N-vinylimidazole units or mixtures thereof and
(c) 0-20 mol% of other monoethylenically unsaturated monomer units from the group consisting of vinyl esters of saturated carboxylic acids, esters of acrylic acid and methacrylic acid derived, in each case, from alcohols having 1 to 8 carbon atoms, acrylonitrile, methacrylonitrile, acrylamide and methacrylamide,
where the total of (a), (b) and (c) is always 100.

5. The use as claimed in any of claims 1 to 4, wherein the copolymers comprise
(a) 8-15 mol% of N-vinylimidazole units and
(b) 85-92 mol% of N-vinylpyrrolidone units,
where the total of (a) and (b) in mol% is always 100.

6. The use as claimed in any of claims 1 to 5, wherein the surfactant system of the detergents is free of alkylbenzenesulfonates.

7. The use as claimed in any of claims 1 to 6, wherein the detergents contain enzymes.

## Revendications

1. Mise en oeuvre de copolymères hydrosolubles qui contiennent, sous forme polymérisée,
(a) le N-vinylimidazole, à raison de 5% à 15% en moles, ou le N-oxyde de 4-vinylpyridine, à raison de 5% à 17,5% en moles,
(b) la N-vinylpyrrolidone, la N-vinyloxazolidone, le méthyl-N-vinylimidazole ou leurs mélanges, à raison de 95% à 62,5% en moles, et
(c) d'autres monomères à insaturation monoéthylénique choisis dans le groupe formé par les esters vinyliques des acides carboxyliques saturés, les esters de l'acide acrylique et de l'acide méthacrylique qui sont chacun dérivés d'alcools possédant 1 à 8 atomes de C, l'acrylonitrile, le méthacrylonitrile, l'acrylamide et la méthacrylamide, à raison de 0% à 30% en moles,
la somme de (a), (b) et (c) étant, en % en moles, toujours de 100, et qui présentent une masse moléculaire moyenne en masse Mₘ de plus de 50 000, en tant qu'inhibiteurs de transfert de couleurs dans des compositions détergentes.

2. Mise en oeuvre selon la revendication 1, **caractérisée en ce que** les copolymères présentent une masse moléculaire moyenne en masse Mₘ allant de 55 000 à 2 millions.

3. Mise en oeuvre selon la revendication 1 ou 2, **caractérisée en ce que** les copolymères présentent une masse moléculaire moyenne en masse Mₘ allant de 75 000 à 500 000.

4. Mise en oeuvre selon l'une quelconque des revendications 1 à 3, **caractérisée en ce que** les copolymères contiennent, sous forme polymérisée,
(a) le N-vinylimidazole, à raison de 5% à 15% en moles,
(b) la N-vinylpyrrolidone, la N-vinyloxazolidone, le méthyl-N-vinylimidazole ou leurs mélanges, à raison de 62,5% à 95% en moles, et
(c) d'autres monomères à insaturation monoéthylénique choisis dans le groupe formé par les esters vinyliques des acides carboxyliques saturés, les esters de l'acide acrylique et de l'acide méthacrylique qui sont chacun dérivés d'alcools possédant 1 à 8 atomes de C, l'acrylonitrile, le méthacrylonitrile, l'acrylamide et la méthacrylamide, à raison de 0% à 20% en moles,
la somme de (a), (b) et (c) étant toujours de 100.

5. Mise en oeuvre selon l'une quelconque des revendications 1 à 4, **caractérisée en ce que** les copolymères contiennent, sous forme polymérisée,
(a) le N-vinylimidazole, à raison de 8% à 15% en moles, et
(b) la N-vinylpyrrolidone, à raison de 85% à 92% en moles, la somme de (a), (b) et (c), en % en moles, étant toujours de 100.

6. Mise en oeuvre selon l'une quelconque des revendications 1 à 5, **caractérisée en ce que** le système tensio-actif des compositions détergentes est exempt d'alkylbenzènesulfonates.

7. Mise en oeuvre selon l'une quelconque des revendications 1 à 6, **caractérisée en ce que** les compositions détergentes contiennent des enzymes.
